# EUROPEAN PATENT APPLICATION

(11) **EP 3 647 559 A1**
(43) Date of publication of application: **06.05.2020**
(21) Application number: 19204980.7
(22) Date of filing: 24.10.2019
(51) Int. Cl.: F01N 3/20

(54) **EXHAUST GAS AFTER-TREATMENT SYSTEM AND ITS CONTROLLER AND CONTROL METHOD**

(30) Priority: 30.10.2018 CN 201811282074
(71) Applicant: Robert Bosch GmbH, 70442 Stuttgart (DE)
(72) Inventor: Liu, Yi, Jiangsu, 214028 (CN)

(57) **Abstract**

The present application provides a control method for an exhaust gas after-treatment system, for a diesel engine, the exhaust gas after-treatment system comprising a treatment liquid tank, a main pump for extracting treatment liquid from the treatment liquid tank, an electromagnetic injection valve in communication with the main pump for injecting the treatment liquid into an exhaust pipe of an engine, and a controller for controlling the main pump and the electromagnetic injection valve, wherein the injection valve is cooled continuously by the treatment liquid after the engine stops. The problem that the injection valve is not effectively cooled after the engine stops is solved.

## Description

### Technical Field

The present application relates to an exhaust gas after-treatment system and its controller and control method, and in particular to an exhaust gas after-treatment system for continuing cooling an injection valve in the exhaust gas after-treatment system after an engine stops, as well as its controller and control method.

### Background Art

To reduce emission of pollutants, an exhaust gas after-treatment system is generally introduced in an exhaust pipe of a diesel engine, so that exhaust gas of the diesel engine is treated before being discharged into air. In the current exhaust gas after-treatment system, a treatment liquid tank is generally included, and treatment liquid in the treatment liquid tank is extracted out by a main pump and injected into the exhaust pipe through an injection valve, the treatment liquid reacting with the exhaust gas in the exhaust pipe to remove or reduce harmful substances in the exhaust pipe. The injection valve is required to extend into the exhaust pipe, and its temperature is increased due to the high temperature of the exhaust gas. Especially in an exhaust gas after-treatment system with a DPF (diesel particulate filter), the DPF needs to be regenerated. When the DPF is regenerated, the temperature of the exhaust gas is actively increased to a maximum of 650 degrees or more. The diesel engine comprises a cooling system which cools the injection valve during normal operation of the diesel engine. Since the cooling system is driven by the main pump of the engine, once the engine stops, the main pump stops at the same time. However, the temperature of the exhaust gas in the exhaust pipe cann't drop immediately, and this takes time. In this process, no system is provided for cooling the injection valve, which causes the temperature of the injection valve to rise rapidly. In this circumstance, the temperature of the injection valve in the exhaust pipe rises and becomes very high. The over-high temperature may cause the treatment fluid to be vaporized, creating crystallization or clogging the injection valve.

Therefore, there is a need to solve the problems in the prior art, and to solve the problem of cooling the injection valve in the exhaust gas after-treatment system after the engine stops.

### Summary of the Invention

An object of the present application is to solve the problem of overheat of the injection valve in the exhaust gas after-treatment system after the engine stops in the prior art.

To achieve the object of the present invention,, the present invention provides a control method for an exhaust gas after-treatment system, for a diesel engine, the exhaust gas after-treatment system comprising a treatment liquid tank, a main pump for extracting treatment liquid from the treatment liquid tank, an electromagnetic injection valve in communication with the main pump for injecting the treatment liquid into an exhaust pipe of an engine, and a controller for controlling the main pump and the electromagnetic injection valve, wherein following steps are performed after the engine stops:
a step S1, an injection valve closing step, to close the injection valve;
a step S2, a treatment liquid holding step, to hold the treatment liquid in the electromagnetic injection valve for a predetermined time;
a step S3, an injection valve opening step, to open the injection valve; and
a step S4, a treatment liquid withdrawal step, to withdraw the treatment liquid held in the injection valve back to the treatment liquid tank.

The present invention also provides the following feature: the steps S1, S2, S3, and S4 can be repeated twice or more than twice.

The present invention also provides the following feature: after the step S4 is completed, a step S5 of closing the injection valve is performed.

The present invention also provides the following feature: the exhaust gas after-treatment system comprises a cooling system driven by the engine, the cooling system being configured for cooling the injection valve, wherein a step S0 of stopping operation of the cooling system is performed after the engine stops.

The present invention also provides the following feature: the main pump is an electromagnetic pump, and the treatment liquid withdrawal step is performed by reversing the main pump.

The present invention also provides the following feature: the exhaust gas after-treatment system comprises a DPF that can be regenerated.

To achieve the object of the present invention, the present invention further provides a controller provided for an exhaust gas after-treatment system, the exhaust gas after-treatment system further comprising a treatment liquid tank, a main pump for extracting treatment liquid from the treatment liquid tank, and an electromagnetic injection valve in communication with the main pump for injecting the treatment liquid into an exhaust pipe of an engine, wherein the controller comprises a non-volatile storage medium having a sequence of instructions stored therein that can perform the above steps.

To achieve the object of the present invention, the present application further provides an exhaust gas after-treatment system comprising the controller described above.

With the technical solutions provided by the present application, the injection valve can be cooled continuously after the engine stops.

### Brief Description of the Drawings

The exemplary embodiments of the present application will be described in detail below with reference to the accompanying drawings. It should be understood that the embodiments described below are merely illustrative of the application and are not intended to limit the scope of the application. In the drawings:
Figure 1 is a functional block diagram of an embodiment of an exhaust gas after-treatment system of the present invention; and
Figure 2 is a flow chart of an embodiment of a method of controlling the exhaust gas after-treatment system of the present invention.

### Detailed Description of Preferred Embodiments

It should be understood that the drawings are only provided for the purpose of illustration of the present application. The application is not intended to be limited to the size of components, the proportional relationship of components and the number of the components.

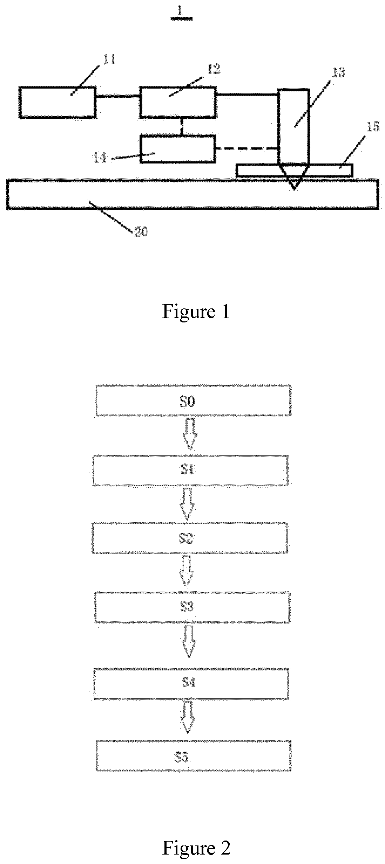

Reference is made to Figure 1 and Figure 2, which show a functional block diagram of an embodiment of an exhaust gas after-treatment system of the present invention. The Exhaust gas after-treatment system 1 of the present invention is mainly applied to a diesel engine, and, in the diesel engine, there is provided with a cooling system 15 which is driven by an engine. Cooling water is used as cooling liquid in the cooling system 15 in this embodiment. The exhaust gas after-treatment system 1 comprises a treatment liquid tank 11, and, in the present embodiment, treatment liquid is urea aqueous solution having a certain proportion. A main pump 12 can extract the treatment liquid from the treatment liquid tank 11, and an electromagnetic injection valve 13 is provided downstream of the main pump 12. The treatment fluid can be injected into an exhaust pipe 20 of the engine through the electromagnetic injection valve 13. In the context of the present application, the exhaust pipe is not part of the exhaust gas after-treatment system, but is part of the engine. The treatment liquid is circulated between the treatment liquid tank 11, the main pump 12, and the electromagnetic injection valve 13 through pipes, the form of the pipes is not limited, and other components such as a filter, a check valve, and the like may be disposed in the pipes. The main pump 12 and the electromagnetic injection valve 13 described above may be controlled by a controller 14, which in this embodiment may be a separately provided controller or a controller shared with other engine system components. The controller 14 comprises a non-volatile storage medium in which control instructions are stored for controlling operation of the main pump 12 and the electromagnetic injection valve 13.

Reference is made to Figure 2, and Figure 2 is a flow chart of an embodiment of a control method of the present invention. The controller 14 is arranged to perform the following actions, so as to control the exhaust gas after-treatment system. After the engine stops, the operation of the cooling system 15 is stopped in a step S0; an injection valve closing step is performed in a step S1, to close the injection valve 13; a treatment liquid holding step is performed in a step S2, in which the treatment liquid is held in the electromagnetic injection valve 13 for a predetermined time; then, an injection valve opening step is performed in a step S3, to open the injection valve 13; and, in a step S4, a treatment liquid withdrawal step is performed, in which the treatment liquid held in the injection valve 13 is withdrawn back to the treatment liquid tank 11. It should be noted that the predetermined time depends on different types of engines. Moreover, in other embodiments, the above steps can be repeated continuously many times if the temperature of the injection valve 13 can not be controlled effectively with one cycle of the above-described steps. After the above actions are completed, a final step S5 can be performed to close the injection valve 13, preventing the injection valve 13 from being contaminated.

In a way described above, when the engine stops and thus the cooling system 15 is disabled, by extracting the treatment liquid having a lower temperature into the injection valve 13 and holding the treatment liquid in the injection valve 13, heat exchange takes place between the treatment liquid and the injection valve 13, and thus the object of controlling the temperature of the injection valve 13 is achieved. After one or more times of heat exchanges, the temperature of the injection valve 13 can be controlled to an acceptable range.

## Claims

1. A control method for an exhaust gas after-treatment system, for a diesel engine, the exhaust gas after-treatment system (1) comprising a treatment liquid tank (11), a main pump (12) for extracting treatment liquid from the treatment liquid tank (11), an electromagnetic injection valve (13) in communication with the main pump (12) for injecting the treatment liquid into an exhaust pipe (20) of an engine, and a controller (14) for controlling the main pump (12) and the electromagnetic injection valve (13), **characterized in that** following steps are performed after the engine stops:
a step S1, an injection valve closing step, to close the injection valve (13);
a step S2, a treatment liquid holding step, to hold the treatment liquid in the electromagnetic injection valve (13) for a predetermined time;
a step S3, an injection valve opening step, to open the injection valve (13); and
a step S4, a treatment liquid withdrawal step, to withdraw the treatment liquid held in the injection valve (13) back to the treatment liquid tank (11).

2. The control method according to claim 1, **characterized in that** the steps S1, S2, S3, and S4 can be repeated twice or more than twice.

3. The control method according to claim 1 or 2, **characterized in that**, after the step S4 is completed, a step S5 of closing the injection valve (13) is performed.

4. The control method according to claim 1 or 2, **characterized in that** the exhaust gas after-treatment system comprises a cooling system (15) driven by the engine, the cooling system (15) being configured for cooling the injection valve (13), wherein a step S0 of stopping operation of the cooling system (15) is performed after the engine stops.

5. The control method according to claim 1 or 2, **characterized in that** the main pump (12) is an electromagnetic pump, and the treatment liquid withdrawal step (S4) is performed by reversing the main pump (12).

6. The control method according to claim 1 or 2, **characterized in that** the exhaust gas after-treatment system comprises a DPF that can be regenerated.

7. A controller (14) provided for an exhaust gas after-treatment system (10), the exhaust gas after-treatment system (1) further comprising a treatment liquid tank (11), a main pump (12) for extracting treatment liquid from the treatment liquid tank (11), and an electromagnetic injection valve (13) in communication with the main pump (12) for injecting the treatment liquid into an exhaust pipe (20) of an engine, **characterized in that** the controller (14) comprises a non-volatile storage medium having a sequence of instructions stored therein that can perform the steps in any one of claims 1 to 6.

8. An exhaust gas after-treatment system (10), **characterized by** comprising a controller (14) according to claim 7.
